# EUROPÄISCHE PATENTSCHRIFT

(11) **EP 1 646 543 B1**
(45) Veröffentlichungstag und Bekanntmachung des Hinweises auf die Patenterteilung: **26.09.2007**
(21) Anmeldenummer: 04766198.8
(22) Anmeldetag: 12.07.2004
(51) Int. Cl.: B60T 8/40

(54) **ELEKTROHYDRAULISCHE BREMSANLAGE FÜR KRAFTFAHRZEUGE**
ELECTROHYDRAULIC BRAKE SYSTEM FOR MOTOR VEHICLES
SYSTEME DE FREINAGE ELECTRO-HYDRAULIQUE POUR AUTOMOBILES

(30) Priorität: 11.07.2003 DE 10331784; 08.10.2003 DE 10346674
(43) Veröffentlichungstag der Anmeldung: 19.04.2006
(73) Patentinhaber: Continental Teves AG & Co. oHG, 60488 Frankfurt am Main (DE)
(72) Erfinder: DRUMM, Stefan, A., 55291 Saulheim (DE)
(86) Internationale Anmeldenummer: PCT/EP2004/051466
(87) Internationale Veröffentlichungsnummer: WO 2005/007476

(56) Entgegenhaltungen:
- EP-A- 1 078 833
- EP-A- 1 142 766
- WO-A-01/72567
- WO-A-02/26538
- WO-A-95/16593
- DE-A- 2 558 338
- DE-A- 4 343 386
- DE-A- 19 753 786

## Beschreibung

Die Erfindung betrifft eine elektrohydraulische Bremsanlage für Kraftfahrzeuge, die in einer Betriebsart "Brake-by-Wire" sowohl vom Fahrzeugführer als auch unabhängig vom Fahrzeugführer ansteuerbar ist, mit
- einem Hauptzylinder, an den Radbremszylinder anschließbar sind,
- einem ersten Kolben, der mit einem Bremspedal gekoppelt ist,
- einem zweiten Kolben, der den Hauptzylinder betätigt,
- einem dritten Kolben, der vom ersten Kolben betätigbar ist,
wobei zwischen dem ersten und dem dritten Kolben mindestens eine durch passive Elemente gebildete Bremspedalcharakteristiksimulationseinrichtung vorgesehen ist, die in der "Brake-by-Wire"-Betriebsart dem Fahrzeugführer ein komfortables Pedalgefühl vermittelt, zwischen dem ersten und dem dritten Kolben eine mit der Bremspedalcharakteristiksimulationseinrichtung zusammenwirkende hydraulische Kammer mit einer absperrbaren Verbindung zu einem drucklosen Druckmittelvorratsbehälter begrenzt ist und alle drei Kolben, sowie die Bremspedalcharakteristiksimulationseinrichtung in einem Gehäuse angeordnet sind,
- einer mittels einer elektronischen Steuer- und Regeleinheit ansteuerbaren, aus dem Druckmittelvorratsbehälter mit Druckmittel versorgten hydraulischen Druckquelle, sowie
- einer durch den dritten Kolben betätigbaren Ventileinrichtung zum Reduzieren des Drucks der Druckquelle auf einen Wert, mit dem der zweite Kolben beaufschlagbar ist,
wobei der zweite und der dritte Kolben durch einen Zwischenraum derart voneinander getrennt sind, dass der dritte Kolben durch den den zweiten Kolben beaufschlagenden Druck in der der Beaufschlagungsrichtung des zweiten Kolbens entgegen gesetzten Richtung beaufschlagt wird.

In der Kraftfahrzeugtechnik finden Brake-by-Wire-Bremssysteme eine immer größere Verbreitung. Bei diesen Bremssystemen kann die Bremse auch ohne aktives Zutun des Fahrers aufgrund elektronischer Signale "fremd-" betätigt werden. Diese elektronischen Signale können beispielsweise von einem elektronischen Stabilitätsprogramm ESP oder einem Abstandsregelsystem ACC ausgegeben werden. Kommt es zu einer Überlagerung einer derartigen Fremdbetätigung mit einer Fahrerbetätigung, so spürt der Fahrer des Kraftfahrzeugs eine Rückwirkung im Bremspedal in Form einer Abweichung von der gewohnten Pedalcharakteristik. Dieser Rückwirkungseffekt auf das Bremspedal kann einerseits für den Fahrer ungewohnt und unangenehm sein, so dass der Fahrer in einer kritischen Situation des Straßenverkehrs das Bremspedal nicht so stark betätigt wie es in dieser Situation notwendig wäre, da er durch die von der Fremdbetätigung der Bremse verursachte Störung der Bremspedalcharakteristik irritiert wird, andererseits erhält der Fahrer bei ABS- und ESP- Regelaktivitäten eine haptische Rückmeldung durch Bremspedalvibrationen. Wünschenswert wäre eine vollständige Vermeidung von Störungen der Bremspedalcharakteristik und gegenüber dem Stand konventioneller Bremssysteme reduzierte, elektronisch steuerbare Pedalvibrationen.

Die EP 1 078 833 A1 beschreibt eine elektrohydraulische Bremsanlage der eingangs genannten Gattung. Durch die besondere Anordnung der Kolben wird eine Entkopplung des Bremspedals von den genannten hydraulischen Komponenten erreicht, so dass der vorhin erwähnte Rückwirkungseffekt weitestgehend eliminiert werden kann. Als weniger vorteilhaft ist bei der vorbekannten Bremsanlage die Tatsache anzusehen, dass die Bremspedalcharakteristik in der "Brake-by-wire"-Betriebsart durch die Eigenschaften der die Bremspedalcharakteristiksimulationseinrichtung bildenden passiven elastischen und dämpfenden Elemente fest vorgegeben ist und keine haptische Rückmeldung des Bremssystems an den Fahrerfuß erlaubt.

Aus der WO 02/26538 A1 ist ein Betätigungswegsimulator für eine Bremsanlage vom Typ "Brake-by-wire" bekannt, bei dem eine definierte Abhängigkeit zwischen der Betätigungskraft und dem Betätigungsweg der Bremsanlage erzeugt werden kann. Zu diesem Zweck ist eine von einem Simulatorkolben begrenzte hydraulische Simulatorkammer vorgesehen, der über ein erstes Ventil bzw. Druckaufbauventil ein Fluidvolumen von einem Druckspeicher zugeführt und aus der über ein zweites ventil bzw. Druckabbauventil ein Fluidvolumen in einen Fluidvorratsbehälter entlassen werden kann. Die Ansteuerung der erwähnten Ventile erfolgt durch eine elektronische Steuereinheit.

Es ist daher Aufgabe der vorliegenden Erfindung, eine Bremsanlage der eingangs genannten Gattung anzugeben, bei der ein von der durch die Bremspedalcharakteristiksimulationseinrichtung vorgegebenen Bremspedalcharakteristik abweichendes Pedalverhalten zu ermöglichen, wobei eine haptische Rückmeldung möglich ist. Außerdem soll die Bremsanlage einen einfachen Aufbau aufweisen und kostengünstig herstellbar sein.

Diese Aufgabe wird erfindungsgemäß dadurch gelöst, dass eine Einrichtung zur Überlagerung der durch die Bremspedalcharakteristiksimulationseinrichtung vorgegebenen passiven Bremspedalcharakteristik mit einer von ihr abweichenden weiteren Bremspedalcharakteristik vorgesehen ist, die durch elektromagnetventilgesteuerte Änderung des Druckmittelvolumens in der hydraulischen Kammer ein von der vorgegebenen Bremspedalcharakteristik abweichendes Pedalverhalten ermöglicht und die ein weiteres elektromagnetisches Ventil aufweist, das bei der Überlagerung der passiven Bremspedalcharakteristik die hydraulische Verbindung zwischen der hydraulischen Kammer und dem Druckmittelvorratsbehälter absperrt. Die Einrichtung ist dabei vorzugsweise durch die elektrische Steuer- und Regeleinheit steuerbar.

Zur Konkretisierung des Erfindungsgedankens ist bei einer vorteilhaften Weiterbildung des Erfindungsgegenstandes vorgesehen, dass das weitere elektromagnetische Ventil als ein elektromagnetisch schaltbares 2/2-Wegeventil ausgebildet ist, wobei die elektrisch steuerbare Einrichtung weiterhin ein in einer zweiten Verbindung zwischen der hydraulischen Kammer und dem drucklosen Druckmittelvorratsbehälter eingefügtes, elektromagnetisch schaltbares zweites 2/2-Wegeventil, sowie ein elektromagnetisch schaltbares drittes 2/2-Wegeventil aufweist, welches in einer zur Druckquelle hin führenden Leitung eingefügt ist.

Vorteilhafte Weiterbildungen des Erfindungsgegenstandes sind in den Unteransprüchen 4 bis 15 aufgeführt.

Im Folgenden wird die Erfindung am Beispiel einer Ausführungsform unter Bezugnahme auf die beiliegenden schematischen Zeichnungen näher erläutert. Es zeigen:
- Fig. 1: den Aufbau der erfindungsgemäßen Bremsanlage gemäß einer ersten Ausführungsform im Ruhezustand,
- Fig. 2: eine alternative Ausführung einer Bremspedalcharakteristiksimulationseinrichtung, die bei der Bremsanlage gemäß Fig. 1 Verwendung finden kann.

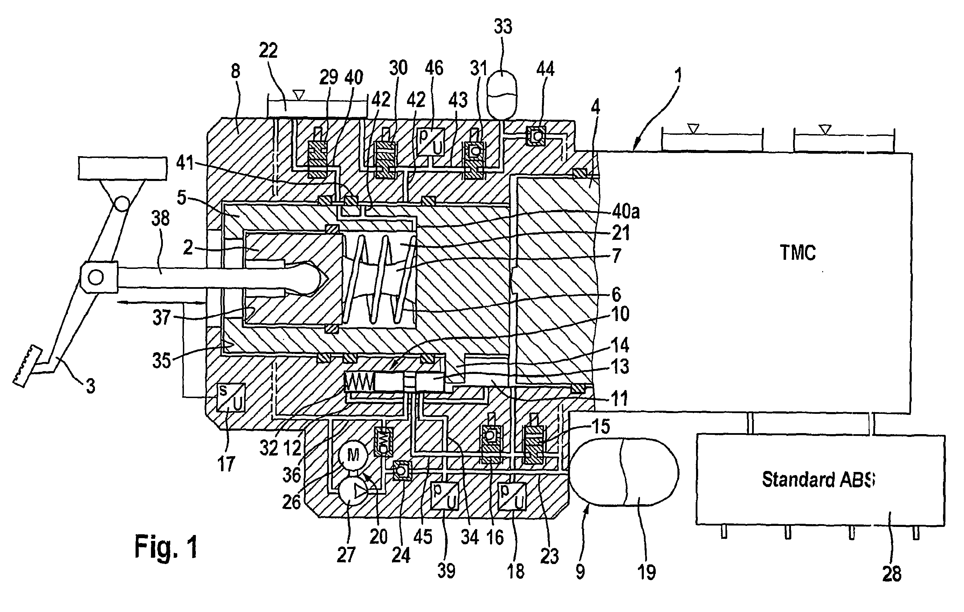

Figur 1 zeigt die erfindungsgemäße Bremsanlage im Ruhezustand. Die Bremsanlage weist ein Bremspedal 3 auf, das über eine Betätigungsstange 38 mit einem ersten Kolben 2 fest verbunden ist. Der Bremspedalweg kann mittels eines Wegsensors 17 erfasst werden. Der erste Kolben 2 ist in einem dritten Kolben 5 angeordnet, wobei zwischen dem ersten und dem dritten Kolben eine hydraulische Kammer 21 angeordnet ist, in der elastische Elemente 6, 7, angeordnet sind die auf den ersten und dritten Kolben Kräfte ausüben und zusammen mit nicht gezeigten Dämpfungs- und/oder Reibelementen eine Bremspedalcharakteristiksimulationseinrichtung bilden, die eine Simulatorkraft zwischen dem ersten (2) und dem dritten Kolben 5 bewirkt.

Weiterhin ist ein zweiter Kolben 4 vorgesehen, der einem Hauptzylinder 1 zugeordnet ist und darin einen Druckaufbau ermöglicht. Der Hauptzylinder 1 ist über eine lediglich schematisch angedeutete elektrohydraulische Regel- bzw. Steuereinheit 28 eines Blockierschutzregelsystems (ABS) an nicht gezeigte Radbremsen des Fahrzeuges angeschlossen.

Der erste (2), der zweite (4) und der dritte Kolben 5 sind in einem Gehäuse 8 untergebracht. Zwischen dem dritten Kolben 5 und dem zweiten Kolben 4 befindet sich ein Zwischenraum 11, der mit Druckmittel befüllbar ist.

Bei Betätigung des Bremspedals 3 bewegt der Fahrer den ersten Kolben 2 entgegen der Simulatorkraft, die von den Bremspedalcharakteristiksimulationseinrichtung erzeugt wird. Die in der Bremspedalcharakteristiksimulationseinrichtung enthaltenen passiven elastischen (6, 7) und reibenden beziehungsweise dämpfenden Elemente sind so ausgeführt, dass sie dem Fahrer das Bremsgefühl vermitteln, das einer gewöhnlichen Bremspedalcharakteristik entspricht. Dies bedeutet, dass bei geringem Bremspedalweg der die Pedalkraft zunächst auf einen Anfangswert springt, bei weiterem Pedalweg zunächst langsam ansteigt und dann bei größerem Bremspedalweg überproportional zunimmt.

Bei Betätigung des Bremspedals wird der Druck im Zwischenraum 11 in einem hydraulisch geregelten Betriebsmodus mit Hilfe einer ersten Ventileinrichtung so gesteuert, dass der dritte Kolben 5 in unmittelbarer Nähe eines Anschlags 35 im Gehäuse 8 bleibt und in einem bevorzugten "By-Wire" Betriebsmodus mit Hilfe einer zweiten Ventileinrichtung so, dass der dritte Kolben 5 in Anlage an dem Anschlag 35 im Gehäuse 8 bleibt. Der "By-Wire"-Betriebsmodus umfasst sowohl vom Fahrer durch ein Niederdrücken des Bremspedals ausgelöste, als auch autonome, das heißt elektronisch gesteuerte, ohne Zutun des Fahrers eingeleitete Bremsungen sowie deren Überlagerungen. Im erstgenannten Betriebsmodus sind Pedalbewegung und Pedalkraft weitgehend, im zweiten Betriebsmodus vollständig entkoppelt vom Betätigungszustand des Hauptzylinders 1. Druckpulsationen im Hauptzylinder 1, die bei ABS- und ESP-Regelvorgängen auftreten, können im Gegensatz zu herkömmlichen Bremsanlagen wegen dieser Entkopplung nicht an das Bremspedal gelangen.

Im hydraulisch geregelten Betriebsmodus kann durch Betätigen des Bremspedals 3 und den damit verbundenen Aufbau einer Simulatorkraft der dritte Kolben 5 in Richtung des zweiten Kolbens 4 bewegt werden, wodurch bereits nach einem sehr geringen Verfahrweg eine Ventileinrichtung 10 betätigt wird. Die Ventileinrichtung 10 ist im dargestellten Beispiel als ein hydromechanisches Verstärkerventil ausgebildet, das einen Ventilkörper 13 aufweist, der mittels einer Feder 32 in Richtung auf den zweiten Kolben 4 zu vorgespannt wird und zwei Steuerkanten aufweist, deren Aufgabe im nachfolgenden Text erläutert wird. Eine hydraulische Verbindung 12 ermöglicht ein Beaufschlagen der dem Zwischenraum 11 abgewandten Stirnfläche des Ventilkörpers 13 mit dem im Zwischenraum 11 eingesteuerten Druck. Der Ventilkörper 13 wirkt dabei mit einem Betätigungselement zusammen, das im dargestellten Beispiel als ein am dritten Kolben 5 angeformter radialer Vorsprung 14 ausgebildet ist. Bewegt sich der dritte Kolben 5 ein wenig in Richtung des zweiten Kolbens 4, so folgt der Ventilkörper 13 seiner Bewegung so lange, bis eine Verbindung zwischen dem Zwischenraum 11 und einer hydraulischen Druckquelle 9 hergestellt wird. Diese Verbindung wird dadurch hergestellt, dass die in der Zeichnung rechte Steuerkante des Ventilkörpers 13 den Strömungsweg zwischen einer von der Druckquelle 9 führenden hydraulischen Druckleitung 23 bzw. einem von dieser abzweigenden Leitungsabschnitt 34 und einem im Zwischenraum 11 mündenden Druckmittelkanal 35 freigibt. Die hydraulische Druckquelle 9 wird vorzugsweise durch einen Hochdruckspeicher 19 gebildet, der durch ein Motor-Pumpen-Aggregat 20 aufgeladen wird. Das Motor-Pumpen-Aggregat 20 besteht aus einem Elektromotor 26 sowie einer hydraulischen Pumpe 27, deren Saugseite an einen drucklosen Druckmittelvorratsbehälter 22 angeschlossen ist, während ihre Druckseite über die vorhin genannte Leitung 23 mit dem Hochdruckspeicher 19 in Verbindung steht. In der Leitung 23 ist ein zum Hochdruckspeicher 19 hin öffnendes Rückschlagventil 24 eingefügt, wobei ein Drucksensor 39 die Überwachung des Ladezustands des Hochdruckspeichers 19 ermöglicht. Der Hochdruckspeicher 19 unterstützt die Pumpe 27 vor allem in den Fällen, in denen beispielsweise bei einer schnellen Vollbremsung in kurzer Zeit Druck aufgebaut werden muss, den die Pumpe 27 aufgrund ihrer Massenträgheit nicht sofort bereitstellen kann. Mittels der Verbindung zwischen dem Hochdruckspeicher 19 und dem Zwischenraum 11 wird dieser mit Druck beaufschlagt, wodurch der zweite Kolben 4 im Hauptzylinder 1 Druck aufbaut und der dritte Kolben 5 in Richtung eines Anschlags 35 im Gehäuse 8 gedrückt wird, an dem er vor dem Betätigen der Bremse anlag. Ein an den Hochdruckspeicher 19 angeschlossenes Ventil 15, ein Druckaufbauventil, ist im unbestromten Zustand geschlossen, während ein in den Druckmittelkanal 34 eingefügtes Trennventil 16, in der dargestellten Ausführungsform ein Trennventil, im unbestromten Zustand geöffnet ist, so dass die Pumpe 27 beziehungsweise der Hochdruckspeicher 19 den Zwischenraum 11 über die vorhin erläuterte Verbindung mit Druck beaufschlagen kann. Ein Drucksensor 18 kann den in dem Zwischenraum 11 eingesteuerten Druck erfassen. Durch Bestromen des Trennventils 16 kann ein Abfließen von Druckmittel aus dem Zwischenraum 11 über die Ventileinrichtung 10 unterbunden werden, während durch Bestromen des Druckaufbauventils 15 dem Zwischenraum 11 Druckmittel zugeführt werden kann.

Im unbetätigten Zustand des Bremspedals 3 wird der erste Kolben 2 über die elastischen Elemente 6 und 7 gegen einen Anschlag 37 angedrückt, der im dritten Kolben 5 ausgebildet ist. Die elastischen Elemente 6, 7, die die vorhin erwähnte Bremspedalcharakteristiksimulationseinrichtung bilden, sind im dargestellten Beispiel in einer vom ersten (2) und dritten Kolben 5 begrenzten hydraulischen Kammer 21 angeordnet, die einerseits mit dem Druckmittelvorratsbehälter 22 und andererseits mit der Druckquelle 9 bzw, dem Hochdruckspeicher 19 verbindbar ist. In der ersten Verbindung 40 zwischen der hydraulischen Kammer 21 und dem Druckmittelvorratsbehälter 22, die durch eine Relativbewegung des dritten Kolbens 5 gegenüber dem Gehäuse 8 absperrbar ist, ist ein elektromagnetisch betätigbares, vorzugsweise stromlos offenes (SO-) 2/2-Wegeventil 29 eingefügt, wobei das Absperren der hydraulischen Kammer 21 dadurch erfolgt, dass die Mündung des im dritten Kolben 5 ausgebildeten Verbindungsabschnitts 40a eine im Gehäuse 8 unbeweglich angeordnete Dichtung 41 überfährt. In der zweiten Verbindung 42 zwischen der hydraulischen Kammer 21 und dem Druckmittelvorratsbehälter 22, die in der Betätigungsrichtung der Kolben 2, 5 hinter der Dichtung 41 an den Verbindungsabschnitt 40a angeschlossen ist, ist ein zweites elektromagnetisch betätigbares, vorzugsweise stromlos geschlossenes (SG-) 2/2-Wegeventil 30 eingefügt, an dessen Eingangsanschluss gleichzeitig eine weitere hydraulische Leitung 43 angeschlossen ist, die zur Druckquelle 9 bzw. dem Hochdruckspeicher 19 führt. In der Leitung 43 sind ein drittes, elektromagnetisch betätigbares, vorzugsweise stromlos geschlossenes (SG-) 2/2-Wegeventil 31, sowie ein zum Hochdruckspeicher 19 hin schließendes Rückschlagventil 44 eingefügt sowie ein weiterer Drucksensor 32 angeschlossen, der der Ermittlung des in der hydraulischen Kammer 21 herrschenden Druckes dient. Außerdem kann an die Leitung 43 ein zweiter (Hilfs-) Hochdruckspeicher 33 angeschlossen sein. Das dritte 2/2-Wegeventil 31 sperrt in seiner ersten Schaltstellung die hydraulische Leitung 43 ab, während es in seiner zweiten Schaltstellung die Funktion eines zum Hochdruckspeicher 19 hin sperrenden Rückschlagventils erfüllt. Die vorhin erwähnten 2/-2-Wegeventile 29, 30, und 31 bilden eine elektrisch steuerbare Einrichtung, die in der Betriebsart "Brake-by-wire" eine Änderung des Druckmittelvolumens in der hydraulischen Kammer 21 und damit ein von der durch die Bremspedalcharakteristiksimulationseinrichtung vorgegebenen Bremspedalcharakteristik abweichendes Pedalverhalten ermöglicht.

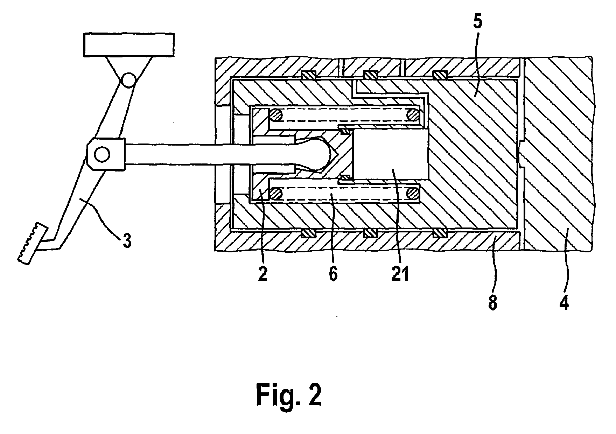

Fig. 2 zeigt eine alternative Ausführung der Bremspedalcharakteristiksimulationseinrichtung, bei der das elastische Element bzw. die Druckfeder 6 außerhalb der hydraulischen Kammer 21 angeordnet ist und somit "trocken" bleibt.

Die im Zusammenhang mit der Zeichnung beschriebene erfindungsgemäße Bremsanlage kann selbstverständlich auch in anderen Betriebsarten betrieben werden. So wird in einer Betriebsart, die durch einen vom Fahrerwillen unabhängigen Bremsvorgang charakterisiert ist, der Betätigungsdruck im Zwischenraum 11 durch Ansteuern der zweiten Ventileinrichtung einem fortlaufend neu berechneten Solldruckwert nachgeführt. Dazu kann durch Bestromen des Trennventils 16 der Volumenstrom zur Ventileinrichtung 10 unterbunden werden, während die Möglichkeit des umgekehrten Volumenstroms von der ersten Ventileinrichtung 10 durch das Trennventil 16 zum Druckaufbau im Zwischenraum 11 erhalten bleibt. Über das Druckaufbauventil 15 kann elektronisch gesteuert ein höherer Betätigungsdruck eingestellt werden als der, den das hydromechanische Verstärkerventil, die Ventileinrichtung 10, vorgeben würde. Zum elektronisch gesteuerten Druckabbau wird die Bestromung des Trennventils 16 vorübergehend ausgesetzt, so dass Druckmittel zur Ventileinrichtung 10 abfließen kann, die in diesem Betriebszustand eine Verbindung zum Druckmittelvorratsbehälter 22 herstellt. Diese Verbindung kommt dadurch zustande, dass die in der Zeichnung linke Steuerkante des Ventilkörpers 13 den Strömungsweg zwischen dem Druckmittelkanal 45 und einer von der Ventileinrichtung 10 zum Druckmittelvorratsbehälter 10 führenden hydraulischen Verbindung 36 freigibt. Diese elektronische Bremsdruckregelung hat den Vorteil, dass ihr Übertragungsverhalten im Rahmen der durch die technischen Daten von Hochdruckspeicher, Druckaufbau- und Trennventil gegebenen Dynamik frei wählbar ist. Daher können eine sogenannte Springerfunktion, d.h. das Springen auf einen vorgegebenen Bremsdruckwert beim Antippen des Bremspedals 3, eine Bremsassistentenfunktion, eine Verzögerungsregelung und ein autonomes Bremsen, wie es beispielsweise für ASR (Antriebs-Schlupf-Regelung), ESP (Elektronisches Stabilitäts-Programm) und ACC (Adaptive Cruise Control) benötigt wird, durch Softwaremaßnahmen realisiert werden. Hierfür wird die Fahrervorgabe in Form einer Bremspedalbetätigung, die durch Weg-, Kraft- oder sonstige Sensoren erfasst wird, von der nicht dargestellten elektronischen Steuer- und Regeleinheit durch Anwendung geeigneter Algorithmen in Radbremsdrücke umgerechnet, die mit Hilfe der elektronisch schaltbaren Ventile im Fremdkraft-Bremsmodul und der nachgeschalteten ABS-Hydraulik realisiert werden.

In dem bereits erwähnten bevorzugten "Brake-by-wire"-Betriebsmodus, der durch einen vom Fahrerverzögerungswunsch eingeleiteten Fremdbremsvorgang charakterisiert ist, wird im Zwischenraum 11 durch eine entsprechende Ansteuerung der Ventile 15, 16 mittels der nicht dargestellten elektronischen Steuer- und Regeleinheit nach Maßgabe des Signals des den Fahrerwunsch erfassenden Wegsensors 17 ein hydraulischer Druck eingeregelt. Dieser Druck ist stets so bemessen, dass er ausreicht, um den dritten Kolben 5 an seinem Anschlag 35 in Gehäuse 8 zu halten. Dadurch ergibt sich eine Bremspedalcharakteristik d.h. ein durch mathematische Funktionen beschreibbarer Zusammenhang zwischen Bremspedalkraft, Bremspedalweg und Bremspedalgeschwindigkeit, in den der Betätigungszustand des Hauptzylinders 1 nicht eingeht. Die wesentlichen Parameter der Bremspedalcharakteristik sind die Steifigkeiten und Vorspannungen der elastischen Elemente 6 und 7. Eine haptische Rückmeldung über das Fahrerpedal kann durch ein elektronisch gesteuertes Abweichen von der durch passive Elemente vorgegebenen Bremspedalcharakteristik erreicht werden. Dazu wird erfindungsgemäß mit Hilfe von elektrisch steuerbaren Ventilen 29, 30, 31 das Druckmittelvolumen in der hydraulischen Kammer 21 gesteuert, wobei die ansonsten offene hydraulische Verbindung 40 zwischen der hydraulischen Kammer 21 und dem Vorratsbehälter 22 abgesperrt wird. Zum Beenden einer Betriebsphase der Bremsanlage mit abweichender Bremspedalcharakteristik wird einfach die Verbindung 40 wieder freigegeben. Der Ventilschaltvorgänge zur Überlagerung der vorgegebenen Bremspedalcharakteristik (Force Feedback Pedal) werden im nachfolgenden Text genauer beschrieben.

Zum Zurückdrücken des Bremspedals 3 wird zunächst die erste Verbindung 40 der hydraulischen Kammer 21 mit dem Druckmittelvorratsbehälter 22 durch Umschalten des ersten 2/2-Wegeventils 29 abgesperrt. Dann wird die Kammer 21 durch geregeltes Öffnen des dritten 2/2-Wegeventils 31 mit einem hydraulischen Druck beaufschlagt, wodurch zusätzliches Druckmittel in die Kammer 21 strömt und das Pedal 3 zurückgedrückt wird. Durch Beobachtung des Drucks in der Kammer 21 mit Hilfe des Drucksensors 32 und der Bremspedalbewegung mit Hilfe des Wegsensors 17 kann der Fahrerwunsch trotz der zusätzlichen Rückstellkraft erfasst werden. Für einen aktiven Abbau des in die Kammer 21 eingebrachten Druckmittelzusatzvolumens wird das erste 2/2-Wegeventil 29 geschlossen gehalten und das Druckmittelvolumen durch Öffnen des zweiten 2/2-Wegeventils 30 in den Druckmittelvorratsbehälter 22 abgelassen. Durch ein Geschlossen Halten des Ventils 29 wird die vorhin erwähnte Dichtung 41 geschont, die von der Mündung des Verbindungsabschnitts 40a überfahren werden kann. Bei nicht mehr benötigter zusätzlicher Rückstellkraft wird nach vollständigem Abbau des Druckmittelzusatzvolumens über das zweite 2/2-Wegeventils 30 die hydraulische Kammer 21 durch Öffnen des ersten 2/2-Wegeventils 29 wieder drucklos geschaltet. Dadurch folgt der Weg des Bremspedals 3 wieder der vorgegebenen passiven Bremspedalcharakteristik.

In einer dritten Betriebsart, die durch einen Ausfall der elektrischen Stromversorgung bzw. die sog. hydraulische Rückfallebene charakterisiert ist, bleiben die elektromagnetischen Ventile 15 und 16 unbestromt. Dadurch kann die Ventileinrichtung 10, das hydromechanische Verstärkerventil, den Betätigungsdruck im Zwischenraum 11 regeln und so eine Bremskraftverstärkung bewirken. Dabei wird der Druckaufbau durch das Zusammenwirken der in der Zeichnung rechten Steuerkante des Ventilkörpers 13 mit dem Leitungsabschnitt 34 geregelt, während der Druckabbau durch das Zusammenwirken der in der Zeichnung linken Steuerkante mit der hydraulischen Leitung 36 geregelt wird. Die hydraulische Verstärkung funktioniert ohne Elektrizität, solange der Hochdruckspeicher 19 unter Druck stehendes Druckmittel abgeben kann. Es liegt eine lineare Kraftverstärkung vor, deren Verstärkungsfaktor durch das Verhältnis der Querschnittsflächen von zweitem Kolben 4 zu drittem Kolben 5 fest vorgegeben ist.

In einer vierten Betriebsart, die durch das Fehlen eines hydraulischen Drucks im Druckspeicher 19 bzw. die sog. mechanische Rückfallebene charakterisiert ist, kann die Bremsanlage rein mechanisch betätigt werden, der dritte Kolben 5 bewegt sich unter der Wirkung einer am Bremspedal 3 eingeleiteten Betätigungskraft von seinem Anschlag 35 weg und verschiebt den zweiten Kolben 4 durch eine mechanische Kraftübertragung, so dass die Betätigung des Hauptzylinders 1 ausschließlich mit Muskelkraft erfolgt. Durch die stattfindende Relativbewegung des dritten Kolbens 5 gegenüber dem Gehäuse 8 erfolgt eine Absperrung der oben erwähnten hydraulischen Kammer 21, indem die Mündung einer an die hydraulische Kammer 21 angeschlossenen Leitung 40 eine im Gehäuse 8 angeordnete, feststehende Dichtung 41 überfährt. Durch die Absperrung wird die Funktion der Bremspedalcharakteristiksimulationseinrichtung 6,7 abgeschaltet, so dass eine direkte Kraftübertragung vom ersten (2) auf den dritten Kolben 5 statt findet.

Mit Hilfe des von der vorgegebenen Bremspedalcharakteristik abweichenden Pedalverhaltens können dem Fahrer über elektronisch gesteuerte Pedalvibrationen haptische Rückmeldung des Betriebszustands des Bremsenregelsystems gegeben werden Dabei können diese Informationen über Frequenz und Intensität der Vibration quantifiziert werden. Weiterhin kann dem Fahrer durch ein elektronisch gesteuertes, temporäres Zurückdrücken des Bremspedals eine Rückmeldung gegeben werden, wenn eine ABS- beziehungsweise ESP-Regelung durchgeführt wird. Vorzugsweise werden diese absichtlichen Rückmeldungen in ihrer Intensität geringer gestaltet als die in herkömmlichen Bremsanlagen prinzipbedingt unvermeidbar starken und oft störenden oder irritierenden Pedalrückwirkungen.

## Patentansprüche

1. Elektrohydraulische Bremsanlage für Kraftfahrzeuge, die in einer Betriebsart "Brake-by-Wire" sowohl vom Fahrzeugführer als auch unabhängig vom Fahrzeugführer ansteuerbar ist, mit
- einem Hauptzylinder (1), an den Radbremszylinder anschließbar sind,
- einem ersten Kolben (2), der mit einem Bremspedal (3) gekoppelt ist,
- einem zweiten Kolben (4), der den Hauptzylinder (1) betätigt,
- einem dritten Kolben (5), der vom ersten Kolben (2) betätigbar ist,
wobei zwischen dem ersten (2) und dem dritten Kolben (5) mindestens eine durch passive Elemente (6, 7) gebildete Bremspedalcharakteristiksimulationseinrichtung vorgesehen ist, die in der "Brake-by-Wire"-Betriebsart dem Fahrzeugführer ein komfortables Pedalgefühl vermittelt, zwischen dem ersten (2) und dem dritten Kolben (5) eine mit der Bremspedalcharakteristiksimulationseinrichtung (6, 7) zusammenwirkende hydraulische Kammer (21) mit einer absperrbaren Verbindung (40) zu einem drucklosen Druckmittelvorratsbehälter (22) begrenzt ist und alle drei Kolben (2, 4, 5), sowie die Bremspedalcharakteristiksimulationseinrichtung (6, 7) in einem Gehäuse (8) angeordnet sind,
- einer mittels einer elektronischen Steuer- und Regeleinheit ansteuerbaren, aus dem Druckmittelvorratsbehälter (22) mit Druckmittel versorgten hydraulischen Druckquelle (9), sowie
- einer durch den dritten Kolben (5) betätigbaren Ventileinrichtung (10) zum Reduzieren des Drucks der Druckquelle (9) auf einen Wert, mit dem der zweite Kolben (4) beaufschlagbar ist,
wobei der zweite (4) und der dritte Kolben (5) durch einen Zwischenraum (11) derart voneinander getrennt sind, dass der dritte Kolben (5) durch den den zweiten Kolben (4) beaufschlagenden Druck in der der Beaufschlagungsrichtung des zweiten Kolbens (4) entgegen gesetzten Richtung beaufschlagt wird, **dadurch gekennzeichnet, dass** eine Einrichtung (29 - 31, 45) zur Überlagerung der durch die Bremspedalcharakteristiksimulationseinrichtung vorgegebenen passiven Bremspedalcharakteristik mit einer von ihr abweichenden weiteren Bremspedalcharakteristik vorgesehen ist, die durch elektromagnetventilgesteuerte Änderung des Druckmittelvolumens in der hydraulischen Kammer (21) ein von der vorgegebenen Bremspedalcharakteristik abweichendes Pedalverhalten ermöglicht und die ein weiteres erstes elektromagnetisches Ventil (29) aufweist, das bei der Überlagerung der passiven Bremspedalcharakteristik die ersten hydraulische Verbindung (40) zwischen der hydraulischen Kammer (21) und dem Druckmittelvorratsbehälter (22) absperrt.

2. Bremsanlage nach Anspruch 1, **dadurch gekennzeichnet, dass** die Einrichtung (29-31) durch die elektronische Steuer- und Regeleinheit elektrisch steuerbar ist.

3. Bremsanlage nach Anspruch 2, **dadurch gekennzeichnet, dass** die elektrisch steuerbare Einrichtung durch ein in einer zweiten Verbindung (42) zwischen der hydraulischen Kammer (21) und dem drucklosen Druckmittelvorratsbehälter (22) eingefügtes, elektromagnetisch schaltbares zweites 2/2-Wegeventil (30), sowie ein elektromagnetisch schaltbares drittes 2/2-Wegeventil (31) gebildet ist, welches in einer zur Druckquelle (9 bzw. 19) hin führenden Leitung (43) eingefügt ist, und dass weitere elektromagnetische ventil (29) ein elektromagnetisch schaltbares 2/2-Wegeventil ist.

4. Bremsanlage nach Anspruch 2 oder 3 **dadurch gekennzeichnet, dass** ein Drucksensor (18) zur Ermittlung des in der hydraulischen Kammer (21) herrschenden Druckes vorgesehen ist.

5. Bremsanlage nach wenigstens Anspruch 3, **dadurch gekennzeichnet, dass** das erste 2/2-Wegeventil (29) als ein stromlos offenes (SO-) Ventil ausgebildet ist, während das zweite 2/2-Wegeventil (30) als ein stromlos geschlossenes (SG-) Ventil ausgebildet ist.

6. Bremsanlage nach Wenigstens Anspruch 3, **dadurch gekennzeichnet, dass** das dritte 2/2-Wegeventil (31) als ein stromlos geschlossenes (SG-) Ventil ausgebildet ist, welches in seiner ersten Schaltstellung die hydraulische Leitung (43) absperrt und in seiner zweiten Schaltstellung die Funktion eines zur Druckquelle (9 bzw. 19) hin schließenden Rückschlagventils erfüllt

7. Bremsalange nach einem der Ansprüche 1 bis 6, **dadurch gekennzeichnet, dass** ein Sensor (39) zum Überwachen des Ladezustands eines Hochdruckspeichers (19) der Druckquelle (9) vorgesehen ist, dessen Ausgangssignal der elektronischen Steuer-und Regel einheit zugeführt wird und der im Gehäuse (8) integriert oder formschlüssig mit diesem verbunden ist.

8. Bremsanlage nach Anspruch 1, **dadurch gekennzeichnet, dass** ein Drucksensor (18) zum Erfassen des im Zwischenraum (11) herrschenden Druckes vorgesehen ist, dessen Ausgangssignal der elektronischen Steuereinheit zugeführt wird und der im Gehäuse (8) integriert oder formschlüssig mit diesem verbunden ist.

9. Bremsanlage nach einem der vorhergehenden Ansprüche,
**dadurch gekennzeichnet, dass** an den Hauptbremszylinder (1) eine elektrohydraulische Steuer- bzw. Regeleinheit (28) eines Blockierschutzregelsystems (ABS) angeschlossen ist.

10. Bremsanlage nach einem der vorhergehenden Ansprüche,
**dadurch gekennzeichnet, dass** die Bremspedalcharakteristiksimulationseinrichtung wenigstens ein elastisches Element (6, 7) enthält, das einen vom Relativweg zwischen erstem (2) und drittem Kolben (5) abhängigen "Federkraft"-Anteil der von der Bremspedalcharakteristiksimulationseinrichtung aufgebrachten Kraft ausübt.

11. Bremsanlage nach Anspruch 10 **dadurch gekennzeichnet, dass** die Bremspedalcharakteristiksimulationseinrichtung wenigstens eine Dämpfungseinrichtung enthält, die eine von der Relativgeschwindigkeit zwischen erstem (2) und drittem Kolben (5) abhängigen "Dämpfungskraft"-Anteil der von der Bremspedalcharakteristiksimulationseinrichtung aufgebrachten Kraft ausübt.

12. Bremsanlage nach Anspruch 10 oder 11 **dadurch gekennzeichnet, dass** die Bremspedalcharakteristiksimulationseinrichtung (6,7) wenigstens eine der Komponenten «Stahlfeder, Elastomerkörper und Reibverbindung» enthält, die die von der Bremspedalcharakteristiksimulationseinrichtung aufgebrachte Kraft ausüben.

13. Bremsanlage nach Anspruch 12 **dadurch gekennzeichnet, dass** jede der Komponenten, die die von der Bremspedalcharakteristiksimulationseinrichtung aufgebrachte Kraft ausüben, entweder außerhalb oder innerhalb der hydraulischen Kammer (21) angeordnet ist.

14. Bremsanlage nach einem der vorangegangenen Ansprüche 1 bis 13 **dadurch gekennzeichnet, dass** das von der vorgegebenen Bremspedalcharakteristik abweichende Pedalverhalten elektronisch gesteuerte Pedalvibrationen einschließt.

15. Bremsanlage nach einem der vorangegangenen Ansprüche 1 bis 13 **dadurch gekennzeichnet, dass** das von der vorgegebenen Bremspedalcharakteristik abweichende Pedalverhalten ein elektronisch gesteuertes temporäres Zurückdrücken des Bremspedals einschließt.

## Claims

1. Electrohydraulic brake system for motor vehicles, which can be operated in a 'brake-by-wire' mode of operation both by the operator and independently of the operator, comprising:
- a master cylinder (1) to which wheel brake cylinders can be connected,
- a first piston (2) which is coupled to a brake pedal (3) ,
- a second piston (4) which actuates the master cylinder (1),
- a third piston (5) which can be operated by the first piston (2),
with at least one brake pedal characteristics simulation device composed of passive elements (6, 7) being provided between the first (2) and the third piston (5) and imparting a comfortable pedal feel to the operator in a 'brake-by-wire' mode of operation, with a hydraulic chamber (21) cooperating with the brake pedal characteristics simulation device (6, 7) being limited between the first (2) and the third piston (5) with a closable connection (40) to an unpressurized pressure fluid supply reservoir (22), and all three pistons (2, 4, 5) and the brake pedal characteristics simulation device (6, 7) being arranged in a housing (8),
- a hydraulic pressure source (9) which can be operated by means of an electronic control and regulation unit, and is fed with pressure fluid from the pressure fluid supply reservoir (22), and
- a valve device (10) operable by the third piston (5) for reducing the pressure of the pressure source (9) to a value used for application of the second piston (4),
with the second (4) and the third piston (5) being isolated from each other by a space (11) in such a fashion that the third piston (5) is acted upon by the pressure that acts on the second piston (4) in the direction opposite to the direction of application of the second piston (4),
**characterized in that** there is provision of a device (29 - 31, 45) to superpose on the passive brake pedal characteristics predefined by the brake pedal characteristics simulation device another brake pedal characteristics which differs therefrom and which, by way of a variation of the pressure fluid volume in the hydraulic chamber (21) controlled by an electromagnetic valve, allows a pedal performance that differs from the brake pedal characteristics, and which includes another, a first electromagnetic valve (29), which upon superposition of the passive brake pedal characteristics, closes the first hydraulic connection (40) between the hydraulic chamber (21) and the pressure fluid supply reservoir (22).

2. Brake system as claimed in claim 1,
**characterized in that** the device (29 - 31) is electrically controllable by the electric control and regulation unit.

3. Brake system as claimed in claim 2,
**characterized in that** the electrically controllable device is formed a second electromagnetically operable two-way/two-position directional control valve (30) inserted into a second connection (42) between the hydraulic chamber (21) and the unpressurized pressure fluid supply reservoir (22), as well as a third electromagnetically operable two-way/two-position
directional control valve (31) inserted into a conduit (43) that leads to the pressure source (9 or 19), and **in that** the additional electromagnetic valve (29) is an electromagnetically operable two-way/two-position directional control valve.

4. Brake system as claimed in claim 2 or 3,
**characterized in that** a pressure sensor (18) is provided to determine the pressure prevailing in the hydraulic chamber (21).

5. Brake system as claimed in at least claim 3,
**characterized in that** the first two-way/two-position directional control valve (29) is configured as a normally open (NO) valve, while the second two-way/two-position directional control valve (30) is configured as a normally closed (NC) valve.

6. Brake system as claimed in at least claim 3,
**characterized in that** the third two-way/two-position directional control valve (31) is configured as a normally closed (NC) valve, which closes the hydraulic conduit (43) in its first switch position and fulfils the function of a non-return valve closing towards the pressure source (9, or 19) in its second switch position.

7. Brake system as claimed in any one of claims 1 to 6,
**characterized in that** a sensor (39) is provided to monitor the charging condition of a highpressure accumulator (19) of the pressure source (9), whose output signal is sent to the electronic control unit and which is integrated in the housing (8) or form-lockingly connected to it.

8. Brake system as claimed in claim 1,
**characterized in that** a pressure sensor (18) is provided to sense the pressure that prevails in the space (11), whose output signal is sent to the electronic control unit and which is integrated in the housing (8) or form-lockingly connected to it.

9. Brake system as claimed in any one of the preceding claims,
**characterized in that** an electrohydraulic control or regulation unit (28) of an anti-lock system (ABS) is connected to the master brake cylinder (1).

10. Brake system as claimed in any one of the preceding claims,
**characterized in that** the brake pedal characteristics simulation device comprises at least one elastic element (6, 7), which exerts a 'spring force' component of the force generated by the brake pedal characteristics simulation device which depends on the relative travel between first (2) and third piston (5).

11. Brake system as claimed in claim 10,
**characterized in that** the brake pedal characteristics simulation device comprises at least one damping device, which exerts a 'damping force' component of the force generated by the brake pedal characteristics simulation device that depends on the relative speed between the first (2) and the third piston (5).

12. Brake system as claimed in claim 10 or 11,
**characterized in that** the brake pedal characteristics simulation device (6, 7) comprises at least one of the components 'steel spring, elastomeric body, and frictional connection' exerting the force generated by the brake pedal characteristics simulation device.

13. Brake system as claimed in claim 12,
**characterized in that** each of the components exerting the force generated by the brake pedal characteristics simulation device are arranged either outside or inside the hydraulic chamber (21).

14. Brake system as claimed in any one of the preceding claims 1 to 13,
**characterized in that** the pedal performance differing from the predetermined brake pedal characteristics includes electronically controlled pedal vibrations.

15. Brake system as claimed in any one of the preceding claims 1 to 13,
**characterized in that** the pedal performance that differs from the predetermined brake pedal characteristics includes an electronically controlled temporary push back of the brake pedal.

## Revendications

1. Système de freinage électrohydraulique pour véhicule automobile qui peut être commandé dans un mode "brake-by-wire" aussi bien par le conducteur du véhicule qu'indépendamment de celui-ci, comportant
- un cylindre principal (1) auquel peuvent être raccordés des cylindres de frein de roue,
- un premier piston (2) qui est couplé à une pédale de frein (3),
- un deuxième piston (4) qui actionne le cylindre principal (1),
- un troisième piston (5) qui peut être actionné par le premier piston (2),
dans lequel il est prévu entre le premier piston (2) et le troisième piston (5) au moins un dispositif de simulation de caractéristique de pédale de frein formé par des éléments passifs (6, 7), lequel, en mode "brake-by-wire", communique au conducteur du véhicule une sensation confortable de pédale, une chambre hydraulique (21), coopérant avec le dispositif de simulation de caractéristique de frein (6, 7) est limitée avec une liaison (40) qui peut être fermée vers un réservoir de fluide sous pression (22) hors pression et les trois pistons (2, 4, 5) ainsi que le dispositif de simulation de caractéristique de pédale de frein (6, 7) sont disposés dans un boîtier (8),
- une source de pression hydraulique (9) alimentée en fluide sous pression depuis le réservoir de fluide sous pression (22), au moyen d'une unité électronique de commande et de régulation, ainsi que
- un dispositif à soupape (10) qui peut être actionné par le troisième piston (5) pour réduire la pression de la source de pression (9) à une valeur à laquelle le deuxième piston (4) peut être sollicité,
dans lequel le deuxième piston (4) et le troisième piston (5) sont séparés l'un de l'autre par un interstice (11) de manière que le troisième piston (5) soit sollicité par la pression agissant sur le deuxième piston (4), dans le sens opposé au sens d'action sur le deuxième piston (4),
**caractérisé en ce qu'**il est prévu un dispositif (29-31, 45) pour superposer à la caractéristique passive de pédale de frein, prédéfinie par le dispositif de simulation de caractéristique de pédale de frein, une autre caractéristique de pédale de frein s'écartant de la première, lequel permet, par variation commandée par soupape électromagnétique du volume de fluide sous pression dans la chambre hydraulique (21), un comportement de la pédale s'écartant de la caractéristique de pédale de frein prédéfinie, et qui comporte une autre première soupape électromagnétique (29) qui, lors de la superposition de la caractéristique passive de pédale de frein, ferme la première liaison hydraulique (40) entre la chambre hydraulique (21) et le réservoir de fluide sous pression (22).

2. Système de freinage selon la revendication 1, **caractérisé en ce que** le dispositif (29-31) peut être commandé de manière électrique par l'unité électronique de commande et de régulation.

3. Système de freinage selon la revendication 2, **caractérisé en ce que** le dispositif pouvant être commandé de manière électrique est formé par une deuxième soupape à 2/2 voies à commande électromagnétique, insérée dans une deuxième liaison (42) entre la chambre hydraulique (21) et le réservoir de fluide sous pression (22) hors pression, ainsi que par une troisième soupape à 2/2 voies (31) à commande électromagnétique qui est insérée dans une conduite (43) menant à la source de pression (9 ou 19), et **en ce que** l'autre soupape électromagnétique (29) est une soupape à 2/2 voies à commande électromagnétique.

4. Système de freinage selon la revendication 2 ou 3, **caractérisé en ce qu'**il est prévu un capteur de pression (18) pour déterminer la pression régnant dans la chambre hydraulique (21).

5. Système de freinage selon au moins la revendication 3, **caractérisé en ce que** la première soupape à 2/2 voies (29) est réalisée sous la forme d'une soupape ouverte lorsqu'elle n'est pas parcourue par un courant, tandis que la deuxième soupape à 2/2 voies (30) est réalisée sous la forme d'une soupape fermée lorsqu'elle n'est pas parcourue par un courant.

6. Système de freinage selon au moins la revendication 3, **caractérisé en ce que** la troisième soupape à 2/2 voies (31) est réalisée sous la forme d'une soupape fermée lorsqu'elle n'est pas parcourue par un courant, qui dans sa première position de commutation ferme la conduite hydraulique (43) et, dans sa seconde position de commutation, assure la fonction d'un clapet de non-retour se fermant vers la source de pression (9 ou 19).

7. Système de freinage selon l'une des revendications 1 à 6, **caractérisé en ce qu'**il est prévu un capteur (39) pour surveiller l'état de charge d'un accumulateur haute pression (19) de la source de pression (9), dont le signal de sortie est amené à l'unité électronique de commande et de régulation et qui est intégré dans le boîtier (8) ou relié à celui-ci par complémentarité de formes.

8. Système de freinage selon la revendication 1, **caractérisé en ce qu'**il est prévu un capteur de pression (18) pour détecter la pression régnant dans l'interstice (11), dont le signal de sortie est amené à l'unité électronique de commande et qui est intégré dans le boîtier (8) ou relié à celui-ci par complémentarité de formes.

9. Système de freinage selon l'une des revendications précédentes, **caractérisé en ce qu'**au cylindre de frein principal (1) est raccordée une unité électrohydraulique de commande ou de régulation (28) d'un système d'antiblocage (ABS).

10. Système de freinage selon l'une des revendications précédentes, **caractérisé en ce que** le dispositif de simulation de caractéristique de pédale de frein contient au moins un élément élastique (6, 7) qui exerce une composante "force élastique", dépendant de la course relative entre le premier piston (2) et le troisième piston (5), de la force appliquée par le dispositif de simulation de caractéristique de pédale de frein.

11. Système de freinage selon la revendication 10, **caractérisé en ce que** le dispositif de simulation de caractéristique de pédale de frein contient au moins un dispositif d'amortissement qui exerce une composante "force d'amortissement", dépendant de la vitesse relative entre le premier piston (2) et le troisième piston (5), de la force appliquée par le dispositif de simulation de caractéristique de pédale de frein.

12. Système de freinage selon la revendication 10 ou 11, **caractérisé en ce que** le dispositif de simulation de caractéristique de pédale de frein (6, 7) contient au moins l'un des composants "ressort d'acier, corps élastomère et liaison par friction" qui exercent la force appliquée par le dispositif de simulation de caractéristique de pédale de frein.

13. Système de freinage selon la revendication 12, **caractérisé en ce que** chacun des composants, qui exercent la force appliquée par le dispositif de simulation de caractéristique de pédale de frein, est disposé soit à l'extérieur, soit à l'intérieur de la chambre hydraulique (21) .

14. Système de freinage selon l'une des revendications 1 à 13 précédentes, **caractérisé en ce que** le comportement de la pédale, s'écartant de la caractéristique de pédale de frein prédéfinie, inclut des vibrations de pédale commandées de manière électronique.

15. Système de freinage selon l'une des revendications 1 à 13 précédentes, **caractérisé en ce que** le comportement de la pédale, s'écartant de la caractéristique de pédale de frein prédéfinie, inclut un retour temporaire de la pédale de frein, commandé de manière électronique.
